## Europäisches Patentamt
## European Patent Office
## Office européen des brevets

(19)

(11) Veröffentlichungsnummer: **0 018 536**
**B1**

(12) # EUROPÄISCHE PATENTSCHRIFT

(45) Veröffentlichungstag der Patentschrift:
**02.03.83**

(21) Anmeldenummer: **80102009.0**

(22) Anmeldetag: **15.04.80**

(51) Int. Cl.³: **G 01 M 3/32,** G 01 M 3/22,
F 17 C 13/12

(54) **Rissanzeigeeinrichtung zur Überwachung der Isolierung von Flüssiggastanks.**

(30) Priorität: **27.04.79 DE 2917255**

(43) Veröffentlichungstag der Anmeldung:
**12.11.80 Patentblatt 80/23**

(45) Bekanntmachung des Hinweises auf die Patenterteilung:
**02.03.83 Patentblatt 83/9**

(84) Benannte Vertragsstaaten:
**DE FR GB**

(56) Entgegenhaltungen:
**DE-A-1 751 406**
**DE-C-1 226 121**
**GB-A-2 005 036**
**US-A-3 374 639**

(73) Patentinhaber: **Rheinhold & Mahla GmbH,**
**Carl-Reiss-Platz 7 - 9, D-6800 Mannheim (DE)**

(72) Erfinder: **Haupt, Walter, Dr., Friedrich-Bayer-Strasse 8,**
**D-5090 Leverkusen 1 (DE)**
Erfinder: **Warncke, Heinz, Dr., Hauptstrasse 1c,**
**D-5489 Senscheid (DE)**
Erfinder: **Friebe, Heinz Wilhelm, Dr., Prümer Strasse 5,**
**D-6700 Ludwigshafen 29 (DE)**
Erfinder: **Reimold, Dieter, Westendstrasse 12,**
**D-6805 Heddesheim (DE)**

(74) Vertreter: **Müller, Gerhard, dr., BAYER AG**
**Zentralbereich Patente, Marken und Lizenzen,**
**D-5090 Leverkusen 1 Bayerwerk (DE)**

### Rißanzeigeeinrichtung zur Überwachung der Isolierung von Flüssiggastanks

Die Erfindung bezieht sich auf eine Rißanzeigeeinrichtung zur Überwachung der Isolierung, insbesondere der Innenisolierung von Gasbehältern für tiefsiedende verflüssigte Gase. Tieftemperaturflüssigkeiten, z. B. verflüssigte Gase (bis −162°C) werden in isolierten Stahl- bzw. Betonbehältern (Flüssiggastanks) gelagert bzw. transportiert. An die Wärmeisolierung werden hohe Sicherheitsanforderungen gestellt, da bei einem Riß oder einer Beschädigung der Isolierschicht eine Wärmebrücke entsteht, bzw. Flüssiggas austritt. Neben den Verdampfungsverlusten kann das zu einer Unterkühlung der tragenden evtl. nicht tiefkaltzähen Aufbauten führen, die dann zerstört würden (Sprödbruch). Noch höhere Anforderungen an die einwandfreie Funktion der Isolierung werden bei Flüssiggastanks gestellt, die für den Transport auf dem Seeweg konzipiert sind.

Aus diesem Grund sind Warnsysteme entwikkelt worden, die ein Versagen von Tank (1. Barriere) und Isolierung sofort anzeigen.

Der IMCO-Gastankercode schreibt z. B. ein Gasdetektionssystem vor, welches darauf beruht, daß beim Durchtritt von Flüssiggas durch die erste Barriere (Tank) dieses in den Zwischenbarrierenraum (interbarrier space) eindringt und dort mit einem Gasdetektor nachgewiesen werden kann. Zu diesem Zweck werden die Hohlräume mit Stickstoff oder gereinigtem Abgas kontinuierlich gespült. Das Spülgas wird durch einen Gasdetektor geleitet, der spezifisch auf das Füllgas reagiert und beim Auftreten eines Risses in der Isolierung ein Warnsignal abgibt.

Ein anderes Rißanzeigesystem macht ebenfalls von dem Prinzip der Gasdetektion Gebrauch, beruht aber auf einem Rohrleitungssystem, das in die Isolierung eingebettet ist. Das Rohrleitungssystem wird kontinuierlich von einem Spülgas durchströmt und steht ähnlich wie bei der oben beschriebenen Einrichtung mit einem auf das Füllgas spezifisch reagierenden Gasdetektor in Verbindung. Da die Isolierschicht erfahrungsgemäß unter einer hohen Zugspannung steht, pflanzt sich ein einmal auftretender Riß von selbst weiter fort und zerreißt oder beschädigt zumindest auch das Rohrleitungssystem an dieser Stelle. Durch das entstandene Leck im Rohrleitungssystem kann dann das verdampfte Füllgas in die Leitung eindringen und gelangt zum Gasdetektor, der in gleicher Weise wie oben beschrieben einen Alarm auslöst.

Neben diesen Einrichtungen, die auf dem Prinzip der Leckanzeige basieren, sind auch elektrische Warnsysteme bekannt geworden, die auf einem in der Isolierschicht eingebetteten elektrischen Leitersystem beruhen. In diesem Fall wird die Änderung der elektrischen Eigenschaften im Falle eines Risses zur Alarmauslösung herangezogen. So wird z. B. in der DE-OS 2 713 007 ein Rißanzeigesystem für die Innenisolierung eines Flüssiggastanks beschrieben, das auf einem in die Isolierschicht eingebetteten Netz von Dehnungsmeßstreifen beruht. Ein Riß in der Isolierung kann dann aufgrund des geänderten Spannungszustandes an den betroffenen Dehnungsmeßstreifen erkannt werden.

In technischer Hinsicht sind folgende Anforderungen an das Warnsystem zu stellen:

1.  Der Einbau eines Leitungssystems in die Isolierschicht darf nicht mit Schwierigkeiten verbunden sein und darf auch nicht die Festigkeit der Isolierschicht beeinträchtigen.

2.  Das Warnsystem muß einschließlich der zugehörigen Hilfsgeräte leicht zu montieren sein.

3.  Vor der Erstbefüllung des Flüssiggastanks und auch zu jedem späteren Zeitpunkt muß eine Funktionskontrolle durchgeführt werden können ohne daß hierzu große Umbauten erforderlich sind.

4.  Ein Riß in der Isolierung soll nicht nur angezeigt, sondern auch geortet werden können.

5.  Im Schadensfall muß eine Reparatur der Isolierschicht möglich sein, wobei auch das Warnsystem wieder in den vorherigen Zustand versetzt wird.

Diese Forderungen können bei den Warnsystemen nach dem Stand der Technik nicht nebeneinander erfüllt werden.

Der Erfindung liegt die Aufgabe zugrunde, ein in dieser Hinsicht verbessertes Warnsystem zu entwickeln.

Ausgehend von einem Warnsystem auf der Basis der Leckanzeige mit Hilfe eines innerhalb der Isolierung angeordneten Leitungssystems wird diese Aufgabe erfindungsgemäß in folgender Weise gelöst:

a)  Das Leitungssystem besteht aus kaltversprödeten, in festem Verbund mit dem Isoliermaterial stehenden Kunststoffrohren, die in die Isolierung eingebettet sind und ein Warngas enthalten, das unter einem Überdruck steht, der größer ist als der maximale Druck des verflüssigten Gases am Boden des Behälters bei maximaler Füllung.

b)  Das im Falle eines Risses im Leitungssystem in das Tankinnere ausströmende Warngas wird von einer Anzeigevorrichtung detektiert, die bei Überschreitung eines vorgegebenen Schwellwertes einen Alarm auslöst.

Im Gegensatz zu dem bekannten oben erwähnten Rißanzeigesystem strömt also im Schadensfalle das Füllgas nicht in das Leitungssystem hinein. Stattdessen ist die Anzeigevorrichtung, so augelegt, daß ein Alarm ausgelöst wird, wenn an irgendeiner Stelle des unter Überdruck stehenden Leitungssystems Warngas austritt. Als Anzeigevorrichtung hat sich ein für das Warngas spezifisches Gasanalysengerät, z. B. ein Massenspektrometer, bewährt, das mit dem höchsten Punkt des Gasbehälters verbunden ist. Als Warngas wird dann vorzugsweise Helium verwendet, das massenspektrometrisch leicht nachzuweisen ist.

Bei einer alternativen Ausführung besteht die Anzeigevorrichtung aus einem am Eingang des Leitungssystems angeordneten Drosselorgan mit parallel geschaltetem Differenzdruckmesser, der beim Überschreiten einer vorgegebenen Druckdifferenz ein Alarmsignal erzeugt. Zur Erzeugung eines konstanten Warngasdruckes ist das Leitungssystem über einen Druckregler an die Warngasquelle angeschlossen.

Zur Durchgangskontrolle des Leitungssystems oder einer einzigen eingebetteten Leitung ist an dem der Einspeisestelle entgegengesetzten Ende eine weitere Drossel mit Strömungsmesser angeordnet, an der ständig eine kleine Menge Warngas entnommen und gemessen wird, wobei die entnommene Menge so klein ist, daß der an der Eingangsdrossel erzeugte Druckabfall deutlich unterhalb der Alarmschwelle bleibt.

Die oben beschriebene pneumatische Rißanzeigeeinrichtung kann auch zur Lokalisierung des Risses verwendet werden, wenn der Strömungswiderstand des Drosselorgans so dimensioniert wird, daß er in die gleiche Größenordnung kommt wie der Strömungswiderstand des Leitungssystems und die Differenzdruckanzeigevorrichtung als Meßeinrichtung für den durch den Leckgasstrom entstehenden Druckabfall am Drosselorgan bzw. für den um diesen Druckabfall verminderten Druck zwischen Drosselorgan und Leitungssystem ausgebildet ist. Bei leerem Gasbehälter ist dann der gemessene Druckabfall unmittelbar ein Maß für die Leitungslänge zwischen Einspeisestelle und der Leckstelle an der das Warngas ausströmt, so daß die Leckstelle und damit der Riß in Verbindung mit der bekannten Geometrie des Leitungssystems geortet werden kann.

Weitere Ausführungsformen der Erfindung sind in den Unteransprüchen beschrieben.

Mit der Erfindung werden folgende Vorteile erzielt:

1.  Das im Schadensfalle ausströmende Warngas bewirkt unabhängig davon, ob der Behälter leer oder voll ist und unabhängig von der Art des Füllgutes einen Alarm bzw. eine Anzeige.
2.  Es wird eine erhöhte Sicherheit der Rißanzeige erreicht, insbesondere dann, wenn der Nachweis des Warngases im Dom des Behälters und die Anzeige einer Strömung des Warngases im Leitungssystem miteinander kombiniert werden.
3.  Die pneumatische Anzeige bietet den Vorteil, daß das Meßsignal zur Ortung des Schadens benutzt werden kann.
4.  Das neue Rißanzeigesystem setzt sich aus erprobten handelsüblichen Komponenten zusammen.
5.  Im Gegensatz zu den früheren Methoden wird kein Spülgas benötigt. Warngas wird nur in geringem Maße im Schadensfall verbraucht.
6.  Die Festigkeit des Isoliersystems wird durch das eingebettete Leitungssystem nicht beeinträchtigt.
7.  Das Rißanzeigesystem kann vor dem Einbau, während des Einbaus und im Einsatz ohne große Umbauten auf seine Funktionsfähigkeit hin überprüft werden.
8.  Die Montage des Leitungssystems ist relativ einfach, da das Leitungssystem als Endlosware zur Verfügung steht und im Falle der häufig angewendeten Schaumstoffisolierung einfach mit eingeschäumt wird.

Im folgenden wird die Erfindung anhand von den in Zeichnungen dargestellten Ausführungsbeispielen näher erläutert. Es zeigt

Fig. 1 einen Flüssiggastank mit schematisch angedeutetem eingebettetem Leitungssystem in der Isolierung und eine auf der Gasdetektion beruhenden Rißanzeige,

Fig. 2 einen vergrößerten Ausschnitt der Isolierung mit dem eingebetteten Leitungssystem,

Fig. 3 bis 5 verschiedene Ausführungsformen einer pneumatischen Rißanzeige mit der Möglichkeit der Ortung des Schadens,

Fig. 6 eine mäanderförmige Anordnung des Leitungssystems und

Fig. 7 ein Leitungssystem mit einer Vielzahl von vertikal angeordneten, einzeln überwachten Rohren.

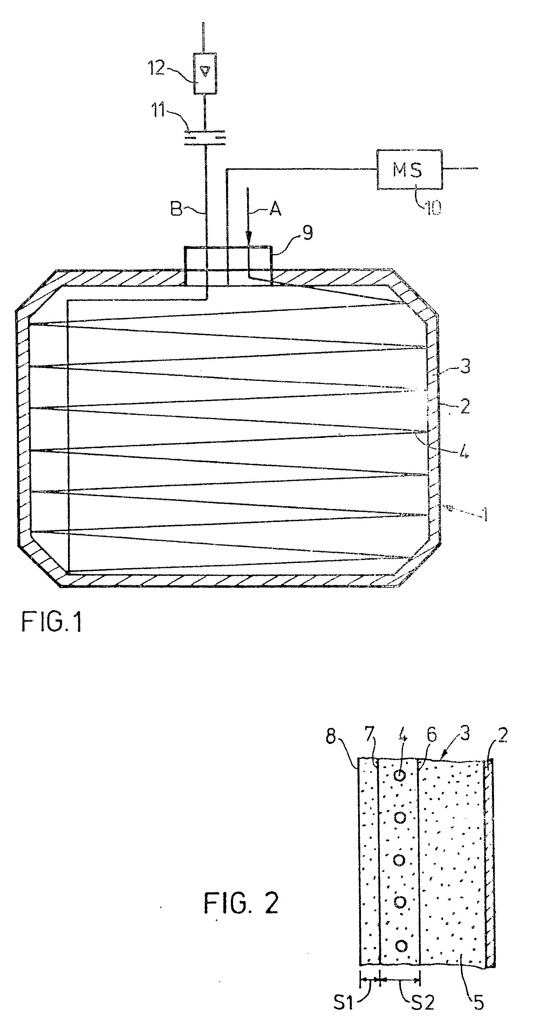

Der in Fig. 1 dargestellte Flüssiggasbehälter 1 besteht aus einer Stahlwand 2 und der innen aufgebrachten Isolierung 3. In die Isolierung 3 ist ein Leitungssystem 4 eingebettet, das spiralförmig um das Behältervolumen verläuft.

Bei Tieftemperaturflüssiggastanks ($-162°$C) werden besonders hohe Anforderungen an das Isoliersystem gestellt. In Fig. 2 ist eine für solche Tanks geeignete Isolierung gezeigt. Sie besteht aus einer auf die Tankwand 2 aufgespritzten Polyurethanschaumstoffschicht 5 mit eingeschäumten Glasfasermatten 6 und 7. Da die Polyurethanschicht aus geschlossenzelligem Schaum besteht, ist sie flüssigkeitsdicht und für die meisten Gase, insbesondere für Methan, auch nahezu diffusionsdicht. Man bezeichnet bei einem solchen Tank die Schaumoberfläche 8 und das dahinter befindliche Glasfasergewebe 7 als erste Sperre S1 und die anschließende PUR-Schicht mit dem Glasfasergewebe 6 als zweite Sperrte S2. Zwischen der ersten und zweiten Sperre wird während des Schäumvorgangs das Leitungssystem 4 eingelegt. Es besteht aus thermoplastischen Kunststoffröhrchen, die durch Vernetzung an der Oberfläche in festem Verbund mit dem PUR-Schaumstoff stehen und in der Kälte verspröden. Die Kunststoffröhrchen bestehen z. B. aus PVC und haben einen Durchmesser von 1,5 bis 5 mm und eine Wandstärke von 1 bis 0,5 mm.

Bei der Abkühlung entsteht in der PUR-Schicht eine hohe Kontraktionsspannung, die als Ursache für die Bildung von Rissen anzusehen ist. Da durch einen Riß an der betreffenden Stelle die Isolierung zerstört wird, muß eine Rißanzeige vorgesehen werden, damit in einem solchen Fall sofort Sicherheitsvorkehrungen getroffen werden können. Die erfindungsgemäße Rißanzeige beruht nun darauf, daß sich in dem Leitungssystem ein Warngas unter Überdruck befindet und beim Auftreten eines Risses an der betreffenden Stelle ein Sprödbruch in dem Kunststoffrohr stattfindet, der gleichbedeutend mit einer Leckstelle im Leitungssystem ist. Durch diese Leckstelle tritt das Warngas, z. B. Helium, nach innen in den Tank und kann am Dom 9 (Fig. 1) mit einem Gasdetektor nachgewiesen werden. Als Gasdetektor kann z. B. ein Massenspektrometer 10 verwendet werden, das auf Helium eingestellt ist. Weiterhin kommen schnellanzeigende, selektive Gasanalysengeräte wie z. B. nichtdispersive IR-Analysatoren in Betracht. Das verflüssigte Gas im Behälter 1 steht normalerweise unter einem leichten Überdruck (0,2 bar.). Damit im Falle eines Risses das Warngas aus der Leckstelle austreten kann und in den Dom 9 aufsteigt, muß das Leitungssystem unter einem Überdruck stehen, der größer ist als die Summe von hydrostatischem Druck des verflüssigten Gases im Tank und dem oben erwähnten Überdruck. Um auch im ungünstigsten Fall noch eine Rißanzeige zu erreichen, sollte der Überdruck im Leitungssystem in jedem Falle größer sein als der maximal auftretende Druck des verflüssigten Gases am Boden des Behälters.

Die beiden Anschlüsse A, B des Leitungssystems 4 und auch des Massenspektrometers 10 werden durch den Dom 9 herausgeführt. Bei A wird das Warngas (Helium) eingespeist. Bei B befindet sich normalerweise ein Blindverschluß. Es besteht jedoch die Möglichkeit, das Leitungssystem 4 auf seine Durchgängigkeit zu kontrollieren. Zu diesem Zweck wird der Blindverschluß abgenommen und stattdessen eine Drossel 11 mit einem Durchflußmesser 12 angeschlossen.

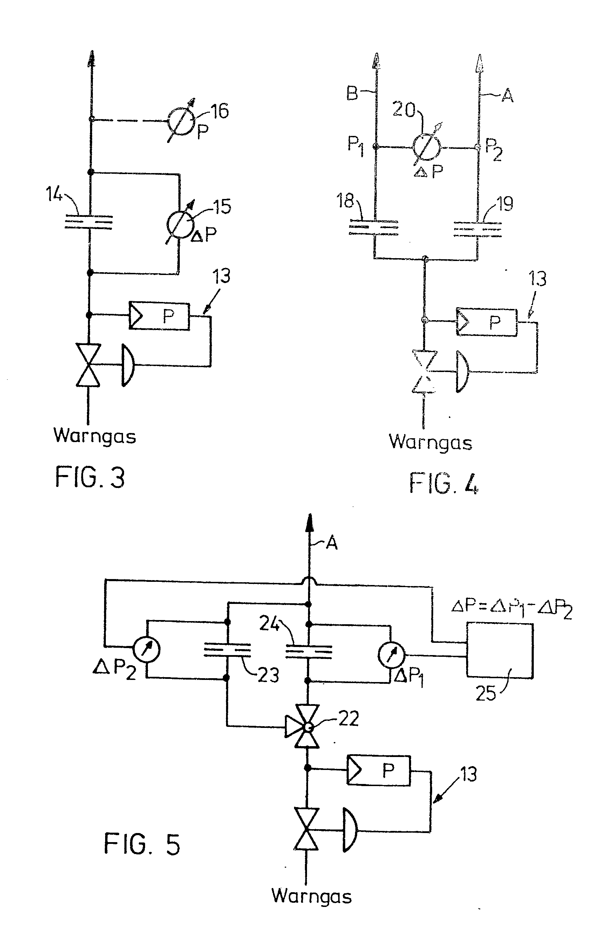

Anstelle des Gasdetektors 10, der auf das ausströmende Warngas reagiert, kann die im Falle eines Risses im Leitungssystem 4 auftretende Gasströmung auch direkt zur Rißanzeige ausgenutzt werden. In diesem Fall wird die in Fig. 3 dargestellte Serienschaltung von Druckregler 13 und Drossel 14 mit Differenzdruckanzeige 15 bei A an das Leitungssystem 4 angeschlossen. Entsprechend den oben angegebenen Richtlinien wird z. B. der Warngasdruck mit dem Regler 13 auf einen Wert von 0,3 bar eingestellt. Im Normalfall ist das Leitungssystem überall geschlossen, so daß keine Strömungsverluste auftreten. Der Differenzdruck $\Delta P$ an der Drossel ist dann 0. Der Druck P im Leitungssystem, der separat angezeigt werden kann (16), stimmt mit dem am Regler 13 eingestellten Vordruck überein. Beim Auftreten eines Risses in der Isolierschicht, der zum Bruch des Leitungssystems 4 führt, strömt das Warngas aus. An der Drossel 14 tritt dann eine Druckdifferenz auf, die einen Alarm auslöst. Außerdem vermindert sich der Druck P im Leitungssystem um den Druckabfall $\Delta$ P an der Drossel 14. Die in Fig. 1 am Ausgang B angeschlossene Kontrollvorrichtung (Verstopfungen im Leitungssystem) kann natürlich auch in Verbindung mit der pneumatischen Rißanzeige gemäß Fig. 3 bis 7 mit Erfolg angewandt werden. Wird die Drossel 11 so dimensioniert, daß die bei B entnommene Menge an Warngas so klein bleibt, daß der durch diese Strömung an der Eingangsdrossel 14 erzeugte Druckabfall deutlich unterhalb der Alarmschwelle liegt, so kann die Kontrolleinrichtung ständig angeschlossen bleiben und stört die pneumatische Rißanzeige nicht. Als Drosselorgane werden üblicherweise Kapillaren oder Blenden verwendet.

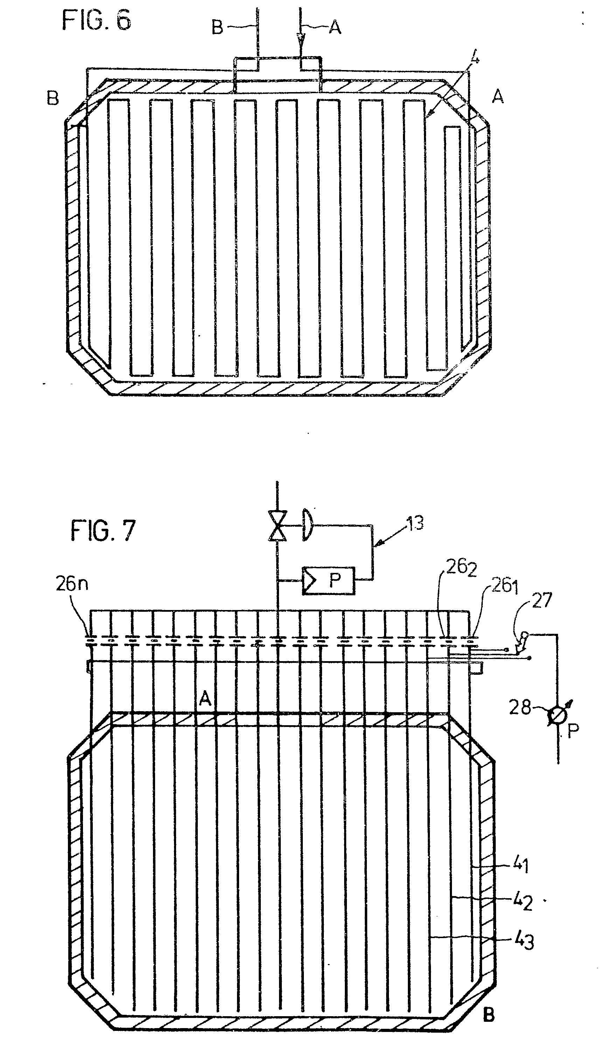

Der an der Eingangsdrossel 14 im Falle eines Risses auftretende Druckabfall $\Delta$ P kann bei leerem Behälter 1 auch zur Ortung (Lokalisierung) des Risses im Leitungssystem 4 herangezogen werden, wenn die Eingangsdrossel 14 so dimensioniert wird, daß ihr Strömungswiderstand von gleicher Größenordnung ist wie der Strömungswiderstand des gesamten Leitungssystems 4. Im Falle eines Risses ist dann nämlich der durch den Leckgasstrom entstehende Druckabfall an der Drossel 14 bzw. der um diesen Druckabfall verminderte Druck P zwischen Drossel und Leitungssystem unmittelbar ein Maß für die Leitungslänge zwischen Einspeisestelle A und Leckstelle. Aus dieser Länge kann in Verbindung mit der bekannten Geometrie des Leitungssystems (spiralförmig nach Fig. 1 oder mäanderförmig nach Fig. 6) die Lage der Leckstelle berechnet werden. Auf diese Weise können auch innere Risse in der Isolierung 3 lokalisiert werden, die nicht an der Oberfläche 8 der Isolierung in Erscheinung treten.

Eine andere Möglichkeit zur pneumatischen Rißanzeige besteht gemäß Fig. 4 darin, daß das Leitungssystem 4 an beiden Enden A, B mit einem gemeinsamen Druckregler 13 zur Erzeugung eines Warngasvordrucks und je einem Drosselorgan 18, 19 mit gleichen Strömungswiderständen versehen ist. In Strömungsrichtung gesehen ist hinter diesen beiden Drosseln 18, 19 eine Differenzdruckmeßeinrichtung 20 angeschlossen, die die Differenz der gegenüber dem Vordruck jeweils um den Druckabfall am Drosselorgan 18, 19 verminderten Drücke anzeigt. Durch diese Schaltung wird beim Auftreten eines Risses der hydrostatische Druck an der Leckstelle und der Strömungswiderstand der Leckstelle eliminiert. Zusammen mit der bekannten Länge und Lage des Leitungssystems 4 sowie bei Kenntnis des in das System einfließenden Warngasmassenstroms ist dann auch bei gefülltem Behälter eine eindeutige Ortung der Leckstelle möglich.

Eine dritte Alternative zur Rißanzeige und Ortung ist in Fig. 5 dargestellt. Am Eingang ist wieder ein Druckregler 13 angeordnet. Auf den Druckregler 13 folgt ein Dreiwegehahn 22, der entweder den Strömungsweg durch ein erstes Drosselorgan 23 oder durch ein zweites Drosselorgan 24 freigibt. An den beiden Drosselorganen 23 und 24 werden die Druckabfälle $\Delta P_1$ und $\Delta P_2$ gemessen und einer Schaltung 25 zur Bildung des Differenzwertes $\Delta P$ zugeführt. Wesentlich ist dabei, daß sich die Strömungswiderstände der beiden Drosseln 23 und 24 stark unterscheiden. Durch die Differenzbildung $\Delta P$ wird wieder der hydrosatische Druck an der Leckstelle und der Strömungswiderstand der Leckstelle eliminiert, so daß der Wert von $\Delta P$ ein eindeutiges Maß für die Länge der Leitung von der Einspeisestelle des Warngases A bis zur Leckstelle ist. Eine Information über die Höhe der Leckstelle unter dem Flüssigkeitsspiegel im Behälter erhält man dann, wenn der Strömungswiderstand der zweiten Drossel 24 sehr viel größer (z. B. um den Faktor 10) ist als der Strömungswiderstand des gesamten nachgeschalteten Leitungssystems 4. In diesem Fall ist der hinter dem zweiten Drosselorgan 24 gemessene Druck annähernd gleich der Summe des hydrostatischen Druckes an der Leckstelle und des statischen Druckes über der Flüssigkeit. Daraus läßt sich bei bekanntem statischem Druck und bekannter Füllhöhe die Höhe der Leckstelle ermitteln.

Bei einem vierten Ausführungsbeispiel wird die Schaltung gemäß Fig. 5 mit einem mäanderförmigen Leitungssystem gemäß Fig. 6 kombiniert. Dabei wird der Strömungswiderstand des ersten Drosselorgans 23 annähernd in Übereinstimmung gebracht mit dem Strömungswiderstand des nachgeschalteten Leitungssystems 4. Der Differenzdruck $\Delta P$, der wie schon beschrieben proportional zur Leitungslänge zwischen Einspeisung A des Warngases und der Leckstelle ist, ergibt dann zusätzlich zur Höhe der Leckstelle auch ihre azimutale Lage.

Das letzte Ausführungsbeispiel (Fig. 7) bietet den Vorteil einer besonders leichten und rechnerisch übersichtlichen Rißortung. Das Leitungssystem besteht hier aus einer Vielzahl von vertikal in gleichem Abstand längs der Mantelfläche des Behälters in der Isolierung 3 eingebetteten Kunststoffrohren $4_1$ bis $4_n$, die jeweils einzeln über eine separate Drossel $26_1$ bis $26_n$ mit der Warngasquelle in Verbindung stehen. Am anderen Ende (B) sind die Kunststoffrohre $4_1$ bis $4_n$ verschlossen. An der Einspeisung (gemeinsamer Anschluß für die Drosseln $26_1$ bis $26_n$) ist wie bei den vorher beschriebenen Anordnungen ein Druckregler 13 zur Erzeugung eines konstanten Warngasdruckes vorgeschaltet. Die Drosselorgane $26_1$ bis $26_n$ besitzen alle den gleichen Strömungswiderstand, der in diesem Fall wesentlich größer sein muß als der Strömungswiderstand des jeweils nachgeschalteten Kunststoffrohres $4_1$ bis $4_n$. Zwischen den Drosseln $26_1$ bis $26_n$ und den nachgeschalteten Kunststoffrohren $4_1$ bis $4_n$ ist ein pneumatischer Meßstellenumschalter 27 mit einem Druckmeßgerät 28 angeordnet, der nacheinander die Drücke zwischen den Drosseln und ihren nachgeschalteten Kunststoffrohren $4_1$ bis $4_n$ zyklisch abgefragt. Im Schadensfalle kann dann die azimutale Lage der Leckstelle aufgrund der Nummer der jeweils angewählten Meßstelle ermittelt werden, während die Höhe der Leckstelle unter dem Flüssigkeitsspiegel durch den hinter dem betreffenden Drosselorgan gemessenen Druck bestimmt ist, wobei wie schon erwähnt der statische Überdruck im Gastank berücksichtigt werden muß. Die Zahl der Meßstellen läßt sich bei dieser Anordnung etwas reduzieren, wenn Gruppen benachbarter Kunststoffrohre, z. B. $4_1$, $4_2$, $4_3$ am Eingang zu einer einzigen Leitung zusammengefaßt sind, die jeweils über eine Drossel mit dem Druckregler 13 verbunden sind. Umgekehrt kann bei gleicher Anzahl der Meßstellen durch eine Zusammenfassung der Kunststoffrohre in Gruppen die Anzahl der Kunststoffrohre vergrößert und damit ihr Abstand voneinander verkleinert werden, so daß man eine höhere Anzeigewahrscheinlichkeit und damit eine größere Sicherheit der Rißanzeige erreicht. Die Anordnung gemäß Fig. 7 hat gegenüber den vorher beschriebenen Ausführungen den Vorteil, daß unabhängig voneinander mehrere Lecks gleichzeitig geortet werden können.

## Patentansprüche

1. Rißanzeigeeinrichtung zur Überwachung der Isolierung, insbesondere der Innenisolierung, von Gasbehältern für tiefsiedende, verflüssigte Gase mit einem Leitungssystem innerhalb der Isolierung, dadurch gekennzeichnet, daß das Leitungssystem (4) aus kaltversprödenden, in festem Verbund mit dem Isoliermaterial stehenden Kunststoffrohren besteht, die in die Isolierung (3) eingebettet sind und ein Warngas enthalten, das unter einem Überdruck steht, der größer ist als der maximale Druck des verflüssigten Gases am Boden des Behälters (1) bei maximaler Füllung und daß eine Anzeigevorrichtung (10, 15, 20, 25, 28) vorgesehen ist, die im Falle eines Risses im Leitungssystem (4) auf das in das Tankinnere ausströmende Warngas anspricht und ein Alarmsignal erzeugt.

2. Vorrichtung nach Anspruch 1, dadurch gekennzeichnet, daß die Anzeigevorrichtung aus einem für das Warngas spezifischen Gasanalysengerät besteht, das mit dem höchsten Punkt (Dom) des Gasbehälters verbunden ist.

3. Vorrichtung nach Anspruch 2, dadurch gekennzeichnet, daß das Gasanalysengerät ein Massenspektrometer (10) ist und das Warngas aus Helium besteht.

4. Vorrichtung nach Anspruch 1, dadurch gekennzeichnet, daß das Leitungssystem (4) mit einem Druckregler (13) zur Erzeugung eines konstanten Warngasdruckes verbunden ist und die Anzeigevorrichtung aus einem am Eingang des Leitungssystems (4) angeordneten Drosselorgan (14) mit parallel geschaltetem Differenzdruckmesser (15) besteht, der beim Überschreiten einer vorgegebenen Druckdifferenz ein Alarmsignal erzeugt.

5. Vorrichtung nach Ansprüchen 1 bis 4, dadurch gekennzeichnet, daß zur Durchgangskontrolle des Leitungssystems (4) an dem der Einspeisestelle entgegengesetzten Ende eine Drossel (11) mit Strömungsmesser (12) angeordnet ist.

6. Vorrichtung nach Anspruch 4 oder 5, dadurch gekennzeichnet, daß der Strömungswiderstand des vorgeschalteten Drosselorgans (14) von gleicher Größenordnung ist wie der Strömungswiderstand des Leitungssystems (4) und die Differenzdruck-Anzeigevorrichtung (15) als Meßeinrichtung für den durch den Leckgasstrom entstehenden Druckabfall am Drosselorgan bzw. für den um diesen Druckabfall verminderten Druck zwischen Drosselorgan (14) und Leitungssystem ausgebildet ist, der bei leerem Behälter unmittelbar ein Maß für die Leitungslänge zwischen Einspeisestelle und Leckstelle ist.

7. Vorrichtung nach Anspruch 1, dadurch gekennzeichnet, daß das Leitungssystem (4) an beiden Enden mit einem gemeinsamen Druckregler (13) zur Erzeugung eines Warngasvordruckes und je einem Drosselorgan (18, 19) gleichen Strömungswiderstandes versehen ist und in Strömungsrichtung gesehen hinter den beiden Drosselorganen (18, 19) eine Differenzdruckmeßeinrichtung (20) angeschlossen ist, die die Differenz der gegenüber dem Vordruck jeweils um den Druckabfall am Drosselorgan (18, 19) verminderten Drücke anzeigt, wodurch der hydrostatische Druck an der Leckstelle und der Strömungswiderstand der Leckstelle eliminiert werden, so daß sich zusammen mit der bekannten Länge und Lage des Leitungssystems (4) sowie des Massenstromes des Warngases auch bei gefülltem Behälter eine Ortung der Leckstelle ergibt.

8. Vorrichtung nach Anspruch 4, dadurch gekennzeichnet, daß das Drosselorgan (24) durch eine Umschaltvorrichtung (22) zeitweise durch ein zweites Drosselorgan (23) ersetzbar ist, dessen Strömungswiderstand von dem des 1. Drosselorgans (24) deutlich verschieden ist und die beiden Drosselorgane (23, 24) mit einer Schaltung (25) zur Bildung des Differenzwertes der Druckabfälle an den beiden Drosselorganen (23, 24) verbunden sind, wodurch der hydrostatische Druck an der Leckstelle und der Strömungswiderstand der Leckstelle eliminiert werden, so daß die Differenzdrücke an den beiden unterschiedlichen Drosselorganen (23, 24) ein eindeutiges Maß für die Länge der Leitung von der Eintrittsstelle des Warngases bis zur Leckstelle ist.

9. Vorrichtung nach Anspruch 8, dadurch gekennzeichnet, daß der Strömungswiderstand des zweiten Drosselorgans (23) sehr viel größer als der Strömungswiderstand des gesamten nachgeschalteten Leitungssystems (4) ist, so daß der hinter dem zweiten Drosselorgan (23) gemessene Druck annähernd die Summe des hydrostatischen Drucks an der Leckstelle und des statischen Druckes über der Flüssigkeit und damit die Höhe der Leckstelle unter dem Flüssigkeitsspiegel im Behälter (1) anzeigt.

10. Vorrichtung nach Ansprüchen 8 und 9, dadurch gekennzeichnet, daß der Strömungswiderstand des ersten Drosselorgans (24) von gleicher Größenordnung ist, wie der des Leitungssystems (4) und das Leitungssystem (4) aus vertikal angeordneten und mäanderförmig verbundenen Rohrstücken besteht, so daß die sich aus der Differenz der Drücke hinter den beiden Drosselorganen (23, 24) ergebende Leitungslänge von der Einspeisung des Warngases bis zur Leckstelle die azimutale Lage der Leckstelle angibt.

11. Vorrichtung nach Anspruch 1, dadurch gekennzeichnet, daß über die gesamte zu überwachende Isolierfläche des Behälters in dichtem Abstand eine größere Zahl einzelner vertikal angeordneter Kunststoffrohre ($4_1 \ldots 4_n$) eingebettet sind, die alle über je ein Drosselorgan ($26_1 \ldots 26_n$) von einem Druckregler (13) mit dem gleichen Warngasdruck beaufschlagt werden, daß alle Drosselorgane ($26_1 \ldots 26_n$) annähernd den gleichen Strömungswiderstand besitzen und dieser wesentlich größer als der Strömungswiderstand des jeweils nachgeschalteten Kunststoffrohres ($4_1 \ldots 4_n$) ist und daß ein pneumatischer Meßstellenumschalter (27) die Drücke zwischen den Drosseln ($26_1 \ldots 26_n$) und ihren nachgeschalteten Kunststoffrohren ($4_1 \ldots 4_n$), bzw. die Druckdifferenzen an den Drosseln ($26_1 \ldots 26_n$) fortlaufend zyklisch abfragt, so daß aufgrund der vom Meßstellenumschalter (27) jeweils angewählten Rohrleitung eine Identifizierung der azimutalen Lage der Leckstelle ermöglicht wird und die Höhe der Leckstelle unter dem Flüssigkeitsspiegel durch die an den Drosselorganen gemessenen Druckdifferenzen, bzw. durch die hinter den Drosselorganen ($26_1 \ldots 26_n$) gemessenen Drücke unter Berücksichtigung des statischen Druckes über der Flüssigkeit bestimmt ist.

12. Vorrichtung nach Anspruch 11, dadurch gekennzeichnet, daß benachbarte Kunststoffrohre zu Gruppen zusammengefaßt sind, die jeweils einer Meßstelle zugeordnet sind.

## Claims

1. A crack indicator for monitoring the insulation, in particular, the internal insulation, of gas containers for low boiling, liquefied gases with a piping system within the insulation, characterised in that the piping system (4) consists of cold-embritlled plastics pipes which are rigidly connected to the insulating material, are imbedded in the insulation (3) and contain a warning gas which is under an excess pressure greater than the maximum pressure of the liquefied gas at the bottom of the container (1) with maximum filling and in that an indicator (10, 15, 20, 25, 28) is provided which responds to the warning gas flowing out into the tank interior in the event of a crack in the piping system (4) and produces an alarm signal.

2. An apparatus according to Claim 1, characterised in that the indicator consists of a gas analysis instrument which is specific to the warning gas and which is connected to the highest point (dome) of the gas container.

3. An apparatus according to Claim 2, characterised in that the gas analysis instrument is a mass spectrometer (10) and the warning gas consists of helium.

4. An apparatus according to Claim 1, characterised in that the piping system (4) is connected to a pressure regulator (13) to produce a constant warning gas pressure and the indicator consists of a throttling member (14) arranged at the inlet of the piping system (4) with a differential pressure gauge (15) connected in parallel, which produces an alarm signal when a predetermined pressure difference is exceeded.

5. An apparatur according to Claims 1 to 4, characterised in that a throttle (11) with flow meter (12) is arranged at the end opposite the feed point to check the passage of the piping system (4).

6. An apparatur according to Claim 4 or 5, characterised in that the flow resistance of the series connected throttling member (14) is of the same order of magnitude as the flow resistance of the piping system (4) and the differential pressure indicator (15) is designed as a measuring device for the pressure drop produced by the leaked gas stream at the throttling member or for the pressure which is reduced by this pressure drop between throttling member (14) and piping system, which is a direct gauge of the pipe length between the feed point and leakage point when the container is empty.

7. An apparatus according to Claim 1, characterised in that the piping system (4) is provided at both ends with a common pressure regulator (13) to produce a warning gas initial pressure and one throttling member (18, 19) respectively of equal flow resistance and a differential pressure measuring device (20) is connected downstream of the two throttling members (18, 19) as viewed in the direction of flow which indicates the difference in the pressures, each of which are reduced by the pressure drop at the throttling member (18, 19) in relation to the initial pressure, so that the hydrostatic pressure at the leakage point and the flow resistance at the leakage point are eliminated so the leakage point ca be located by means of the known length and position of the piping system (4) as well as the quantitative flow of the warning gas even when the container is full.

8. An apparatus according to Claim 4, characterised in that the throttling member (24) can be replaced by a change-over device (22) and at times by a second throttling member (23) whose flow resistance differs clearly from that of the first throttling member (24) and the two throttling members (23, 24) are connected to a circuit (25) for forming the differential value of the pressure drops at the two throttling members (23, 24) so that the hydrostatic pressure at the leakage point and the flow resistance of the leakage point are eliminated so that the differential pressures at the two different throttling members (23, 24) are a clear gauge of the length of the pipe from the warning gas inlet point to the leakage point.

9. An apparatus according to Claim 8, characterised in that the flow resistance of the second throttling member (23) is very much greater than the flow resistance of the entire subsequent piping system (4) so that the pressure measured downstream of the second throttling member (23) indicates approximately the sum of the hydrostatic pressure at the leakage point and the static pressure above the liquid and thus the height of the leakage point beneath the level of the liquid in the container (1).

10. An apparatur according to Claims 8 and 9, characterised in that the flow resistance of the first throttling member (24) ist of the same order of magnitude as that of the system (4) and the pipe system (4) consists of vertically arranged meanderingly connected pipe pieces so that the pipe lenght resulting from the difference in the pressures downstream of the two throttling members (23, 24) from the warning gas feed to the leakage point indicates the azimuthal position of the leakage point.

11. An apparatus according to Claim 1, characterised in that over the entire insulating face of the container to be monitores, a relatively large number of individual vertically arranged plastics pipes $(4_1 \ldots 4_n)$ are imbedded at close intervals and are all subjected to the same warning gas pressure from a pressure regulator (13) via a throttling member $(26_1 \ldots 26_n)$ respectively, in that all throttling members $(26_1 \ldots 26_n)$ have approximately the same flow resistance and this flow resistance is substantially greater than the flow resistance of the respective following plastics pipe $(4_1 \ldots 4_n)$ and in that a pneumatic measured position cummutator (27) continuously and cyclically scans the pressures between the throttles $(26_1 \ldots 26_n)$ and their following plastics pipes $(4_1 \ldots 4_n)$ ot the pressure differences at the throttles $(26_1 \ldots 26_n)$ so that, on the basis of the respektive pipe line selected by the measured point commutator (27), it ist possible to identify the azimuthal position of the leakage point and the height of the leakage point beneath the level of liquid is determined by the pressure differences measured at the throttling members or by the pressures measured downstream of the throttling members $(26_1 \ldots 26_n)$, taking into consideration the static pressure obove the liquid.

12. An apparatus according to Claim 11, characterised in that adjacent plastics pipes are combined into groups which are allocated to a measuring point.

## Revendications

1. Dispositif indicateur de fissure pour surveillance de l'isolation, et notamment de l'isolation intérieure, de réservoirs à gaz liquéfié à bas point d'ébullition, avec un réseau de canalisations dans l'isolation, ledit dispositif étant caractérisé en ce que le réseau de canalisations (4) est constitué par des tubes en matière plastique fragiles à froid, reliés au matériau isolant, logés dans l'isolation (3) contenant un gaz d'alerte sous une surpression supérieure à la pression maximale exercée par le gaz liquéfié sur le fond du réservoir (1) au remplissage maximal; et un dispositif indicateur (10, 15, 20, 25, 28) est prévu, réagit à la pénétration de gaz d'alerte à l'intérieur du réservoir dans le cas d'une fissure du réseau de canalisations, et produit un signal d'alarme.

2. Dispositif selon revendication 1, caractérisé en ce que le dispositif indicateur est constitué par un analyseur de gaz, spécifique du gaz d'alerte et relié au point hat (dôme) du réservoir.

3. Dispositif selon revendication 2, caractérisé en ce que l'analyseur de gaz un spectromètre de masse (10) et le gaz d'alerte est de l'hélium.

4. Dispositif selon revendication 1, caractérisé en ce que le réseau de canalisations (4) est relié à un régulateur de pression (13), pour la production d'une pression constante du gaz d'alerte, et le dispositif indicatuer est constitué par un organe étrangleur (14), disposé à l'entrée du réseau de canalisations (4) et muni d'un manomètre différentiel (15) en parallèle, qui délivre un signal d'alarme lors du dépassement d'une pression différentielle prédéterminée.

5. Dispositif selon revendications 1 à 4, caractérisé par le montage d'un étrangleur (11) avec un débitmètre (12) à l'extrémité opposée au point d'injection, pour le contrôle de continuité du réseau de canalisations (4).

6. Dispositif selon une des revendications 4 ou 5, caractérisé en ce que la résistance à l'écoulement de l'organe étrangleur (14) monté en amont est du même ordre de grandeur que celle du réseau de canalisations (4), et le dispositif indicateur de pression differentielle (15) est réalisé en dispositif de mesure de la perte de charge produite sur l'organe étrangleur par le débit de fuite de gaz, ou de la pression entre l'organe étrangleur (14) et le réseau de canalisation, diminuée de ladite perte de charge, et fournit directement dans le cas du réservoir vide, une mesure de la longueur de canalisations entre le point d'injection et le point de fuite.

7. Dispositif selon revendication 1, caractérisé en ce que les deux extrémités du réseau de canalisations (4) sont munies d'un régulateur de pression (13) commun, pour la production d'une pression d'alimentation en gaz d'alerte, et équipées d'un organe étrangleur (18, 19) de même résistance à l'écoulement; et un manomètre différentiel (20) est relié en aval des deux organes étrangleurs (18, 19) et indique la différence des pressions, réduites chacune par rapport à la pression d'alimentation de la perte de charge sur l'organe étrangleur (18, 19), ce qui élimine la pression hydrostatique au point de fuite et la résistance à l'écoulement de ce dernier, de sorte que la longueur et la position du réseau de canalisations (4) et le débitmasse du gaz d'alerte étant connus, le point de fuite est localisé même dans le cas d'un réservoir plein.

8. Dispositif selon revendication 4, caractérisé en ce qu'un dispositif commutateur (22) remplace temporairement l'organe étrangleur (24) par un second organe étrangleur (23), dont la résistance à l'écoulement diffère notablement de celle du premier organe étrangleur (24), et les deux organes étrangleurs (23, 24) sont reliés à un montage (25) formant la différence des pertes de charge sur les deux organes étrangleurs (23, 24), ce qui élimine la pression hydrostatique au point de fuite et la résistance à l'écoulement de ce dernier, de sorte que la pression différentielle sur les deux organes étrangleurs différents (23, 24) constituent une mesure univoque de la longueur de canalisation untre le point d'entrée du gaz d'alerte et le point de fuite.

9. Dispositif selon revendication 8, caractérisé en ce que la résistance à l'écoulement du second organe étrangleur (23) est très supérieure à celle de l'ensemble du réseau de canalisation (4) en aval, de sorte que la pression mesurée en aval du second organe étrangleur (23) indique sensiblement la somme de la pression hydrostatique au point de fuite et de la pression statique sur le liquide, et par suite la distance du point de fuite au niveau du liquide dans le réservoir (1).

10. Dispositif selon revendications 8 et 9, caractérisé en ce que la résistance à l'écoulement du premier organe étrangleur (24) est du même ordre de grandeur que celle du réseau de canalisations (4) et ce dernier est constitué des tronçons de tube disposés verticalement et reliés en grecques, de sorte que la longueur de canalisations entre le point d'injection du gaz d'alerte et le fuite, résultant de la différence des pressions en aval des deux organies étrangleurs (23, 24), indique la position azimutale du point de fuite.

11. Dispositif selon revendication 1, caractérisé en ce qu'un nombre élevé de tubes plastiques individuels ($4_1$ ... $4_n$) sont disposés verticalement et très près les uns des autres sur toute la surface isolante du réservoir à surveiller et reliés chacun par un organe étrangleur ($26_1$ ... $26_n$) à un régulateur de pression (13) qui leur applique la même pression de gaz d'alerte; tous les organes étrangleurs ($26_1$ ... $26_n$) présentent sensiblement la même résistance à l'écoulement, qui est nettement supérieure à celle du tube plastique en aval ($4_1$ ... $4_n$); et un commutateur pneumatique de point de mesure (27) scrute cycliquement en permanence les pressions entre les étrangleurs ($26_1 \ldots 26_n$) et les tubes plastiques en aval ($4_1 \ldots 4_n$) ou les différences de pression sur les étrangleurs ($26_1 \ldots 26_n$), de sorte que la canalisation sélectée par le commutateur de point de mesure (27) permet une identification de la position azimutale du point de fuite et la distance de ce dernier au niveau du liquide est déterminée par les différences de pression mesurées sur les organes étrangleurs ou les pressions mesurées en aval de ces derniers ($26_1 \ldots 26_n$), compte tenu de la pression statique sur le liquide.

12. Dispositif selon revendication 11, caractérisé par la réunion de tibes plastiques voisins en groupes, affectés chacun à un point de mesure.

FIG.1

FIG. 2

FIG. 3

FIG. 4

FIG. 5

$$\Delta P = \Delta P_1 - \Delta P_2$$

0 018 536

FIG. 6

FIG. 7